# EUROPEAN PATENT SPECIFICATION

(11) **EP 0 679 820 B1**
(45) Date of publication and mention of the grant of the patent: **01.12.1999**
(21) Application number: 95200034.7
(22) Date of filing: 10.01.1995
(51) Int. Cl.: F16J 15/00, F16J 15/16

(54) **Sealing system for a rotating shaft**
Abdichtungssystem für rotierende Welle
Dispositif d'étanchéité pour arbre rotatif

(30) Priority: 28.04.1994 NL 9400686
(43) Date of publication of application: 02.11.1995
(73) Proprietor: IHC HOLLAND N.V., NL-3361 EP Sliedrecht (NL)
(72) Inventor: Visser, Teunis, NL-3361 GB Sliedrecht (NL)
(74) Representative: Lips, Hendrik Jan George, Ir.

(56) References cited:
- EP-A- 0 011 343
- DE-A- 3 213 392
- GB-A- 2 174 156
- NL-A- 9 002 416

## Description

The invention relates to a sealing system for leading a rotating shaft through a stationary wall as this is described in the preamble of claim 1.

Such a sealing system is known by GB-A-2 174 156. This known system is used as a stern-tube seal for a ship. In view of this the lip of the closure ring, positioned at the side where the highest pressure is present, is facing the related end of the shaft. Due to this said lip is pressed against the shaft so that a proper sealing between the closure ring and the shaft is obtained.

Now the object of the present invention is to modify said known system so that it is particular suitable to be used for a pump. In case of a pump it is possible that the medium to be pumped contains relatively hard particles which might end up between said closure ring and the shaft. By the pressure exerted on the lip of the ring wear of said lip might occur.

Further the ducts connected to the pump can extend in such a way that after switching off the pump the medium in the pump housing might be under a pressure lower than that of the atmosphere. In that case it might be desirable to prevent that air is flowing into the pump housing, which in certain cases is undesirable.

Said objects are obtained by applying the features according to the characterizing portion of the main claim.

Further it can be remarked that NL-A-9002416 describes a sealing system for a shaft in which use is made of two chambers between three closure rings. To the one chamber cooling medium is fed which is flowing along the central closure ring to the other chamber and is removed from this. The lips of the three rings extend in the same direction. So the working of this system is totally different from that according to the present patent application.

Another sealing system, making use of three closure rings is known from EP-A-0 011 343.

With this known system, the lips of the closure rings face the side of the shaft under the highest pressure. The lips are pressed against the shaft by the pressure of the medium so that a proper sealing between the closure ring and the shaft is obtained.

In order to prevent large wear of the closure ring lip or the shaft, the shaft can be provided with helical grooves. Therefore, on rotation of the shaft some of the pumped medium will flow between the shaft and the lip so that there will be a film between the shaft and the lip, which will have a lubricating effect.

Although in many cases, such a sealing system functions very reliably and has a long service life, it has turned out that under certain circumstances it can not fully meet the requirements.

When the sealing system is applied with for example a pump, the same disadvantages arise as described in case of GB-A-2 174 156.

In order to prevent leakage during normal operation, it is provided for, that on the shaft there is a third closure ring, the lip of which faces that of the primary closure ring for forming a primary chamber between both the closure rings, in which means are present for supplying the primary chamber with medium under a pressure being equal to or higher than the pressure occurring in the pump during normal operation.

When the primary chamber should be supplied with medium under a pressure equal to the pressure occurring during normal operation of the pump, one can employ a duct communicating with the delivery side of the pump, in which duct a check valve is mounted such that only medium can flow to the primary chamber. By this, it is prevented that on stopping the pump air can be sucked into the pump housing through the duct.

In particular a further closure ring will be mounted on the shaft at its low pressure side for forming a secondary chamber between this and the secondary closure ring, to which chamber a discharge duct connects and opens into a reservoir communicating with the suction side of the pump through a float-operated cock.

The means for supplying the chamber with medium under a pressure higher than that which occurs therein during operation of the pump can be represented by a duct in which a throttle valve is located for controlling the quantity of medium flowing through the duct. The quantity of medium supplied can be measured by means of a flow meter and the measured quantity can be compared to the quantity of medium flowing from a secondary chamber formed between the third closure ring and a further closure ring mounted outside of it.

Here, the pressure in the chamber will be equal to the pressure occurring in the pump housing during operation. The springs around the lip of the closure ring cause the lip to be pressed against the shaft with just sufficient force, so that wear of the running surface of the primary closure ring will not occur. Owing to this, at rest it can optimally function as a vacuum valve.

Here, naturally the third closure ring must provide the sealing of the chamber to the outside. In order to prevent wear of the lip of the closure ring, or of the position of the shaft the lip is contacting, the shaft can be provided with a helical groove in the known way.

The sealing system according to the present invention can also be applied for leading the shaft through a watertight partition. Then, two closure rings are mounted on the shaft in such a way, that their lips are facing each other and are being kept pressed against the shaft and are lubricated in relation to the shaft in that the chamber between the closure rings is supplied with water from a reservoir through a duct, said reservoir communicating with a duct protruding above the water line across a certain distance. Here, the water level in the reservoir is kept up by means of a float-operated cock.

The invention is further explained by way of embodiments shown in the drawing, in which:

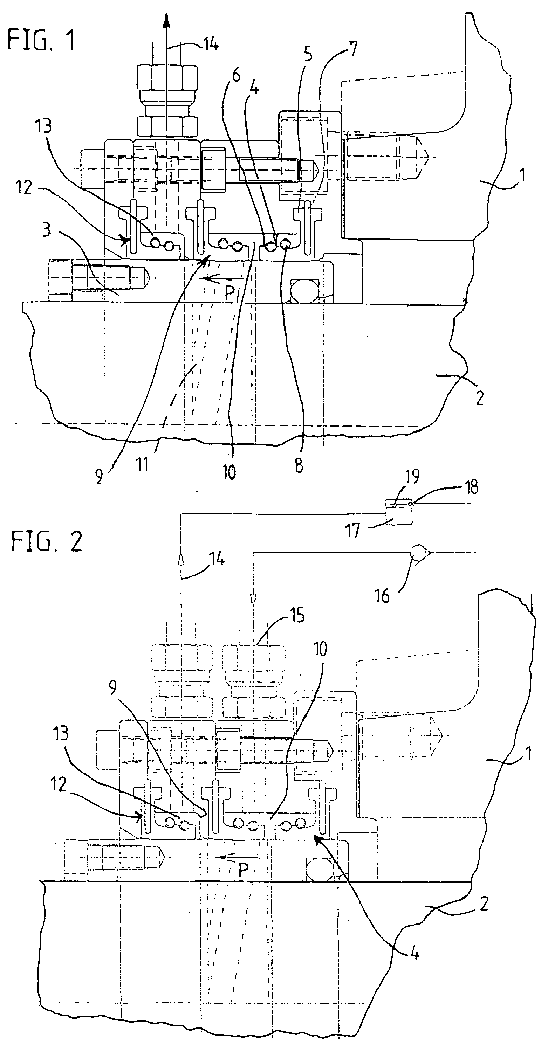

Fig. 1 to 6 diagrammatically show cross-sections parts of seven different embodiments.

Fig. 1 shows part of a pump housing 1 in which a shaft is rotatably supported in a way not further indicated, for driving an impeller not shown. In a way not further indicated, a bush 3 is mounted on the shaft 2, in such a way that leakage of medium between the bush and the shaft can not occur. The bush 3 cooperates with the closure rings to be described below and can be replaced if they are worn.

A first closure ring 4 is connected to the housing 1 by means of rings and bolts not further indicated. This closure ring comprises the collar 5 and the lip 6. The collar 5 can incorporate the metal ring 7 serving both for stiffening the collar and for locating the collar and the rings that are connected to the housing. The lip 6 can be pressed against the shaft 2 by means of the springs 8.

When underpressure would occur in the pump housing 1, on rest of the pump for example, the lip 6 of the closure ring 4 will be pressed against the shaft 2 and no air will flow into the pump housing 1.

Since during operation of the pump overpressure will occur in the housing 1, medium will be able to flow between the lip 6 of the closure ring 4 and the shaft 2. In order to prevent the outflow of medium, a second closure ring 9 is mounted. Thus, a primary chamber 10 is formed between the closure rings 4 and 9, which chamber will be under almost the same pressure as the pump housing 1. The closure ring 9 now seals the shaft in relation to the outside and thus a considerable pressure drop can occur across the closure ring. By applying the grooves 11 in the shaft or in the bush 3, some medium is transported along in the direction of the arrow P so that a certain lubrication between the lip 6 of the closure ring 9 and the bush 3 is obtained.

A third closure ring 12 is mounted for forming a secondary chamber 13 serving to receive medium having flown past the second closure ring 9 and discharge it to a certain location by means of the duct 14. The pressure difference across the third closure ring 12 will only be small so that its lip will lie against the shaft with a small force.

Fig. 2 shows an embodiment substantially corresponding to the one of Fig. 1. Corresponding parts have been indicated with the same reference numbers. Here, the chamber 10 is supplied with medium from the delivery side of the pump through the duct 15 having the check valve 16 therein. Therefore, during operation of the pump the lip 6 of the closure ring 4 will lie against the bush 3 with only a small force. By means of the check valve 16 it is prevented that at rest of the pump, air would be sucked into the pump housing through the duct 15.

The medium 13 that has arrived in the chamber 13 is supplied to the suction side of the pump through the duct 14. To prevent air from flowing into the pump housing at rest of the pump, the duct 14 is connected to a reservoir 17. The medium that has arrived in the reservoir 17 is removed therefrom through a cock 18 operated by a float 19.

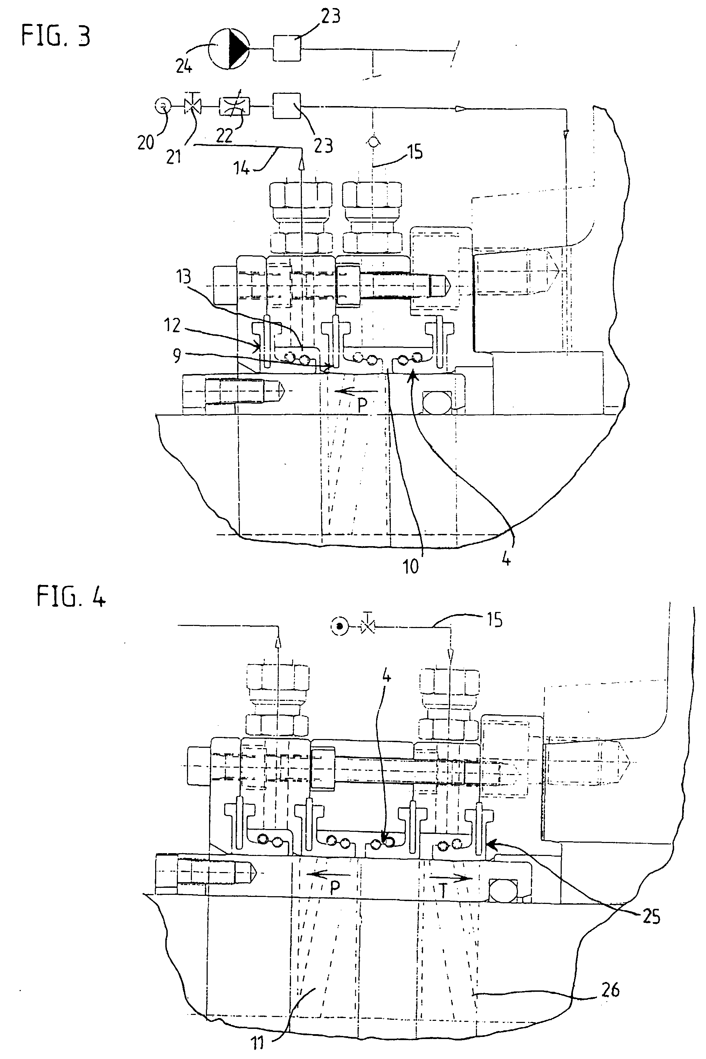

The embodiment shown in Fig. 3 corresponds largely to the one according to Fig. 2. Here however, from the connection 20 and the valve 21 the duct 15 is supplied with medium under a pressure higher than that present in the pump housing 1 during operation. The quantity of medium flowing through the duct 15 can be controlled by means of the throttle valve 22 and be measured by means of the flow meter 23. This quantity can be compared to the quantity of medium flowing from the duct 14 so that the quantity of medium ending up in the pump housing 1 can be determined.

For the supply of medium to the duct 15 one could also use a positive-displacement pump 24 with the flow meter 23 after it again. This is indicated in the upper part of Fig. 3.

In this embodiment, for example water can be supplied through the duct if this does not cause any problems on blending with the pumped medium.

If the quantity of water being blended with the pumped medium has to be as small as possible, the embodiment according to Fig. 4 can be employed.

Here, corresponding parts are indicated with the same reference numbers as in preceding Figures.

The pressure of the water supplied to the duct 15 is again higher than the pressure of the medium in the pump housing 1. The presence of an additional closure ring 25 and the accompanying groove 26 determines the quantity of water being able to enter the pump housing 1 in the direction of the arrow T. The closure ring 4 provides for that at rest of the pump no air can flow into the pump housing 1.

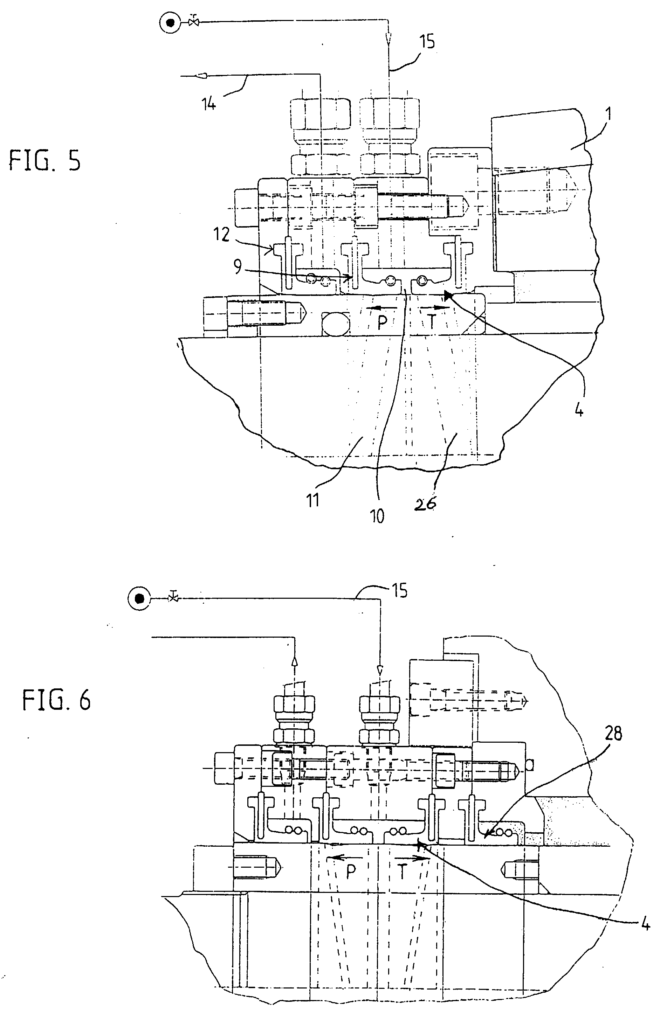

In the embodiment according to Fig. 5 too, the requirement is that only a small quantity of water is allowed to flow to the pump housing 1, so is allowed to be blended with the pumped medium. The primary chamber 10 is supplied with medium under a higher pressure than that of the pumped medium. The closure ring 4 is combined with the groove 26 so that a small amount of transport of water occurs in the direction of the arrow T.

Fig. 6 shows an embodiment corresponding largely to the one of Fig. 5. This embodiment serves for example for pumping sea water containing some sand. In connection with that, a retaining closure ring 28 is mounted for preventing sand from entering between the closure ring 4 and the bush 3. Through the duct 15, water under a pressure higher than the one in the pump housinq 1 is supplied.

It will be obvious that only a number of possible embodiments of a sealing system according to the invention have been illustrated in the drawing and described above and that many modifications can be made without being beyond the inventive idea as indicated in the claims.

## Claims

1. Sealing system for leading a rotating shaft (2), such as the shaft of a pump or a similar apparatus, through a stationary wall (1), the pressure at one side of the wall differing from the pressure at the other side of the wall, said system comprising at least three closure rings (4,9,12, 25), mounted around the shaft and consisting of rubber or a similar flexible material, each of said closure rings having a substantially radial collar (5) by which the closure ring is fixed to the wall and a lip (6) extending from said collar and lying against said shaft (2) such that between two closure rings (4,9), the lips of which are directed towards each other, a primary chamber (10) is formed and between one of these rings (9) and a third ring (12) a secondary chamber (13) is formed from which secondary chamber (13) fluid can be removed till outwardly of said sealing-system by means of a discharge duct (14), wherein said primary chamber (10) is positioned near the side of the wall (1) where during normal operation of the apparatus the pressure is lower than at the other size, **characterized in that** the lip of the third closure ring (12) being directed to the other two closure rings (4,9) limiting the first chamber (10).

2. Sealing system according to claim 1 for use in a pump, **characterized in that** means (15) are present for supplying medium to said primary chamber (10), said medium having a pressure equal to or higher than the pressure occuring in the pump during normal operation.

3. Sealing system according to claim 2, **characterized in that** said means for supplying medium to said primary chamber (10) is in the form of a duct (15) communicating with the delivery side of the pump (1), a check valve (16) being mounted in said duct such that medium can only flow towards said chamber (10).

4. Sealing system according to claim 3, **characterized in that** said discharge duct (14), connected to said secondary chamber (13), is connected to a reservoir (17) communicating with the suction side of the pump through a cock (18) operated by a float (19).

5. Sealing system according to claim 3, **characterized in that** said medium being supplied to the duct (15) connected to said primary chamber (10) is having a pressure higher than that which occurs in the pump housing (1) during operation, a throttle valve (22) being present for controlling the quantity of medium flowing through said duct (15), said quantity of medium being measured by means of a flow meter (23) and being compared with the quantity of medium flowing through said discharge duct (14) connected to said secondary chamber (13).

## Patentansprüche

1. Abdichtungssystem zum Hindurchführen einer rotierenden Welle (2), beispielsweise der Welle einer Pumpe oder einer ähnlichen Vorrichtung, durch eine ortsfeste Wand (1), wobei der Druck auf einer Seite der Wand sich von dem Druck auf der anderen Seite der Wand unterscheidet, wobei das System mindestens drei Verschlußringe (4, 9, 12, 25) umfaßt, die um die Welle herum angeordnet sind und aus Gummi oder einem ähnlichen flexiblen Material bestehen, wobei jeder der Verschlußringe eine im wesentlichen radiale Manschette (5) aufweist, durch welche der Verschlußring an der Wand festgelegt ist, und eine Lippe (6), die sich so von der Manschette aus erstreckt und gegen die Welle (2) anliegt, daß zwischen zwei Verschlußringen (4, 9), deren Lippen aufeinander zu gerichtet sind, eine Hauptkammer (10) gebildet wird und daß zwischen einem dieser Ringe (9) und einem dritten Ring (12) eine Nebenkammer (13) gebildet wird, aus welcher Nebenkammer (13) Fluid mittels einer Abflußleitung (14) bis nach außerhalb des Abdichtungssystems abgeführt werden kann, wobei die Hauptkammer (10) nahe der Seite der Wand (1), wo während des normalen Betriebes der Vorrichtung der Druck niedriger ist als auf der anderen Seite, angeordnet ist,
dadurch gekennzeichnet, daß
die Lippe des dritten Verschlußrings (12) zu den die Hauptkammer (10) begrenzenden anderen beiden Verschlußringen (4, 9) hin gerichtet ist.

2. Abdichtungssystem nach Anspruch 1 zur Verwendung in einer Pumpe, dadurch gekennzeichnet, daß Mittel (15) zum Zuführen von Medium zu der Hauptkammer (10) vorhanden sind, wobei das Medium einen Druck aufweist, der gleich groß ist wie oder höher ist als der Druck, welcher in der Pumpe während des normalen Betriebes auftritt.

3. Abdichtungssystem nach Anspruch 2, dadurch gekennzeichnet, daß das Mittel zum Zuführen von Medium zu der Hauptkammer (10) die Gestalt einer Leitung (15) aufweist, die mit der Ausgangsseite der Pumpe (1) in Verbindung steht, wobei ein Rückschlagventil (16) so in der Leitung angeordnet ist, daß das Medium nur zu der Kammer (10) hin fließen kann.

4. Abdichtungssystem nach Anspruch 3, dadurch gekennzeichnet, daß die mit der Nebenkammer (13) verbundene Abflußleitung (14) mit einem Speicher (17) verbunden ist, der über ein Absperrglied (18), das von einem Schwimmkörper (19) betätigt ist, mit der Saugseite der Pumpe in Verbindung steht.

5. Abdichtungssystem nach Anspruch 3, dadurch gekennzeichnet, daß das Medium, das der Leitung (15) zugeführt wird, die mit der Hauptkammer (10) verbunden ist, einen Druck aufweist, der höher ist als der Druck, der während des Betriebes in dem Pumpengehäuse (1) auftritt, und daß ein Drosselventil (22) vorgesehen ist zum Regeln oder Steuern der Menge an Medium, die durch die Leitung (15) fließt, wobei die Menge an Medium mittels eines Strömungsmessers (23) gemessen wird und mit der Menge an Medium verglichen wird, die durch die Abflußleitung (14) fließt, die mit der Nebenkammer (13) verbunden ist.

## Revendications

1. Système d'étanchéité pour faire passer un arbre tournant (2), tel que l'arbre d'une pompe ou d'un appareil similaire, à travers une paroi fixe (1), la pression sur un côté de la paroi étant différente de la pression sur l'autre côté de la paroi, ledit système comprenant au moins trois anneaux d'obturation (4, 9, 11, 25) montés autour de l'arbre et constitués par du caoutchouc ou un matériau flexible similaire, chacun desdits anneaux d'obturation ayant une collerette sensiblement radiale (5) grâce à laquelle l'anneau d'obturation est fixé sur la paroi et une lèvre (6) s'étendant depuis ladite collerette et étant appliquée contre ledit arbre (2), de telle sorte qu'une chambre primaire (10) est formée entre deux anneaux d'obturation (4, 9) dont les lèvres sont dirigées l'une vers l'autre et qu'une chambre secondaire (13) est formée entre l'un de ces anneaux (9) et un troisième anneau (12), chambre secondaire (13) dont on peut retirer du fluide vers l'extérieur dudit système d'étanchéité au moyen d'un conduit d'évacuation (14), système dans lequel ladite chambre primaire (10) est située près du côté de la paroi (1) où la pression est inférieure à celle de l'autre côté pendant le fonctionnement normal de l'appareil, caractérisé en ce que la lèvre du troisième anneau d'obturation (12) est dirigée vers les deux autres anneaux d'obturation (4, 9) limitant la première chambre (10).

2. Système d'étanchéité selon la revendication 1, pour une utilisation dans une pompe, caractérisé en ce qu'il est prévu des moyens (15) pour amener un fluide dans ladite chambre primaire (10), ledit fluide ayant une pression égale ou supérieure à la pression régnant dans la pompe en fonctionnement normal.

3. Système d'étanchéité selon la revendication 2, caractérisé en ce que les moyens prévus pour amener un fluide dans ladite chambre primaire (10) se présentent sous la forme d'un conduit (15) communiquant avec le côté refoulement de la pompe (1), un clapet anti-retour (16) étant monté dans ledit conduit de façon que le fluide ne puisse circuler qu'en direction de ladite chambre (10).

4. Système d'étanchéité selon la revendication 3, caractérisé en ce que ledit conduit d'évacuation (14), relié à ladite chambre secondaire (13), est relié à un réservoir (17) communiquant avec le côté aspiration de la pompe par l'intermédiaire d'un robinet (18) actionné par un flotteur (19).

5. Système d'étanchéité selon la revendication 3, caractérisé en ce que ledit fluide amené au conduit (15) relié à ladite chambre primaire (10) possède une pression supérieure à celle qui se produit dans le carter de pompe (1) pendant le fonctionnement, une vanne d'étranglement (22) étant présente pour contrôler la quantité de fluide s'écoulant par ledit conduit (15), ladite quantité de fluide étant mesurée au moyen d'un débitmètre (23) et étant comparée à la quantité de fluide s'écoulant par le conduit d'évacuation (14) relié à ladite chambre secondaire (13).
